# FASCICULE DE BREVET EUROPEEN

(11) **EP 2 425 117 B1**
(45) Date de publication et mention de la délivrance du brevet: **15.11.2017**
(21) Numéro de dépôt: 10715307.4
(22) Date de dépôt: 08.03.2010
(51) Int. Cl.: F02P 5/152

(54) **PROCÉDÉ D'ADAPTATION D'UN MOTEUR À L'INDICE DE CARBURANT PAR INCRÉMENTATION DE L'INDICE D'OCTANE APPRIS DU CARBURANT**
VERFAHREN ZUR ANPASSUNG EINES KRAFTSTOFFINDEX DURCH DAS INKREMENTIEREN DER GELERNTEN OKTANZAHL
METHOD OF ADAPTATION OF A MOTOR TO A FUEL INDEX BY INCREMENTING THE LEARNED OCTANE NUMBER OF THE FUEL

(30) Priorité: 30.04.2009 FR 0952885
(43) Date de publication de la demande: 07.03.2012
(73) Titulaire: Renault S.A.S., 92100 Boulogne-Billancourt (FR)
(72) Inventeur: PINTEAU, Franck, F-92370 Chaville (FR); VALENCIENNES, Edouard, F-75015 Paris (FR)
(86) Numéro de dépôt international: PCT/FR2010/050389
(87) Numéro de publication internationale: WO 2010/125260

(56) Documents cités:
- EP-A1- 0 576 516
- EP-A2- 0 311 097
- DE-A1- 4 001 474
- US-A- 4 934 327

## Description

L'invention concerne un procédé d'adaptation du moteur à l'indice d'octane du carburant. Cette invention concerne notamment les moteurs à allumage commandé dont l'avance à l'allumage peut être contrôlée électroniquement. Plus particulièrement, l'invention concerne un procédé d'adaptation par incrémentation de l'indice d'octane appris du carburant.

Actuellement, on trouve divers types de carburants présentant des caractéristiques différentes. Parmi ces caractéristiques figure l'indice d'octane. Parmi les différents carburants, l'indice d'octane peut couramment prendre les valeurs approximatives de 98, 95, 91 et 87. Les carburants présentant des indices 98 et 95 sont souvent utilisés en Europe de l'ouest, ceux présentant un indice d'octane 91 peuvent être rencontrés aux Etats-Unis et ceux présentant un indice d'octane 87 sont par exemple utilisés en Iran.

Pour optimiser le compromis performance, consommation, fiabilité, il est souhaitable d'avoir un réglage moteur, et notamment le réglage d'avance à l'allumage, adapté pour chaque indice d'octane.

Lorsque le réglage d'avance à l'allumage est défini pour un indice d'octane et le carburant utilisé présente un indice d'octane différent, notamment lors d'un changement de zone géographique, le moteur peut présenter un fonctionnement insatisfaisant. Il peut par exemple présenter un phénomène de cliquetis, en particulier dans le cas où le moteur est optimisé pour un carburant ayant un indice d'octane supérieur au carburant utilisé, ou bien les capacités du moteur peuvent ne pas être optimisées au mieux dans le cas d'un carburant ayant un indice d'octane inférieur à celui pour lequel le moteur est réglé.

Le cliquetis peut notamment être dû à un phénomène de combustion anormale par détonation générant notamment un transfert de chaleur important susceptible d'endommager la chambre de combustion. Le cliquetis peut apparaître de façon plus ou moins aléatoire dans certaines conditions de fonctionnement, notamment lorsque l'indice d'octane du carburant n'est pas adapté au réglage du moteur.

Parmi les techniques pour corriger le phénomène de cliquetis on peut citer la correction anti cliquetis expliquée ci dessous. Celle-ci est utilisée essentiellement lorsque les écarts sont faibles. Cette correction, curative, ne permet pas de corriger de façon satisfaisante les effets de cliquetis lorsque la différence d'indice d'octane est trop importante.

Cette correction anti cliquetis connue comprend deux types d'action :
- une correction rapide, appelée aussi boucle rapide (BR), qui réduit fortement l'avance à l'allumage, et
- une correction lente, appelée aussi boucle lente (BL), qui réduit l'avance à l'allumage de façon moins significative.

Ainsi, par exemple, lors de la détection de cliquetis à un temps t, la boucle rapide (BR) et la boucle lente (BL) sont activées afin d'obtenir une valeur de X° de correction d'avance à l'allumage en vue de supprimer le cliquetis.

A un temps t+1, si le cliquetis n'est plus détecté, on réduit la valeur de la boucle lente (BL) d'une valeur donnée. Cette valeur est réduite de nouveau à chaque temps t+1 pour lequel le cliquetis n'est pas détecté.

Dans le cas où le phénomène de cliquetis est à nouveau détecté, la boucle rapide (BR) et la boucle lente (BL) sont activées à nouveau afin de corriger à nouveau l'avance à l'allumage.

Il est également connu un dispositif permettant de gérer deux réglages basés sur deux indices d'octane différents. Si le cliquetis est détecté pendant une certaine période de temps avec un réglage basé sur l'indice d'octane 98, le réglage est modifié pour se baser sur le réglage de l'indice d'octane 91. Lors de l'arrêt du moteur, le réglage est « remis à zéro », c'est à dire que le réglage revient au réglage par défaut (basé sur l'indice d'octane 98).

Ces dispositifs de correction ne sont cependant pas idéaux. En effet, soit ils manquent de performance et de finesse sur l'indice d'octane détecté, soit ils restent en permanence à la limite de la détection de cliquetis, ce qui peut continuer à endommager la chambre de combustion.

Si l'on utilise un indice d'octane inférieur à celui utilisé pour le réglage du moteur, il n'y a pas de risque d'endommager celui-ci mais les performances du moteur ne sont pas optimisées.

US4934327A et DE4001474A1 montrent deux procédés d'adaptation du moteur à l'indice d'octane du carburant connues dans l'état de la technique.

Or, il n'existe pas à ce jour de dispositif permettant d'ajuster assez précisément le réglage du moteur à l'indice d'octane du carburant afin d'optimiser les performances du moteur.

L'invention a pour objectif de permettre au moteur d'être adapté au mieux à l'indice d'octane du carburant.

Selon un premier aspect de l'invention, il s'agit d'un procédé d'adaptation du moteur à l'indice d'octane du carburant par incrémentation de l'indice d'octane appris, ledit procédé partant d'un réglage de référence de l'avance à l'allumage dans un champ de fonctionnement moteur pour un indice d'octane déterminé, ledit réglage de référence correspondant à un fonctionnement sans cliquetis (mais à la limite du cliquetis) du moteur pour un régime (N) et un couple déterminés, le champ de fonctionnement moteur étant découpé en plusieurs zones, chacune d'elle comprenant une valeur corrective anti-cliquetis de l'avance à l'allumage du réglage de référence, le procédé comprenant au moins les étapes suivantes :
- Initialisation d'un compteur (TDC_CTR) de nombre de points morts hauts à 0 à l'activation du procédé ;
- Détection de la présence de cliquetis sur une période de temps t;
- Activation d'une boucle de correction de l'avance de l'angle d'allumage dans le cas d'une détection de la présence de cliquetis sur une période de temps t;
- Décrémentation d'une partie de la boucle de correction de l'avance en cas d'absence de détection de la présence de cliquetis sur la période de temps t+1 ;
- Incrémentation du compteur de nombre de points morts hauts si la correction d'avance dans la zone en cours est inférieure à un seuil propre à cette zone,
- Incrémentation d'un autre compteur (CTR) du nombre de zones à chaque période de temps (X ms) du nombre de zones dans lesquelles la boucle de correction d'avance est inférieure à un autre seuil propre à chaque zone ;
le dépassement par le compteur de nombre de points morts hauts d'un seuil déterminé, ou l'atteinte ou dépassement par le compteur de nombre de zones d'un autre seuil déterminé, provoquant le basculement vers un réglage de référence correspondant à un indice d'octane supérieur.

L'incrémentation du compteur de nombre de points morts hauts est réalisée à chaque point mort haut (½ tour moteur pour un moteur à quatre cylindres).

Par « champ de fonctionnement moteur », on entend une plage de valeurs comprises entre l'axe des abscisses représentant la vitesse du moteur (régime), généralement en tours par minute (tr/min), l'axe des ordonnées représentant la charge du moteur, généralement en Newton mètre (N.m) et une courbe représentant les performances maximum du moteur.

Par « réglage de référence », on entend les valeurs données de pilotage du moteur dont une valeur donnée de l'avance à l'allumage dans un champ de fonctionnement moteur, le réglage étant donné pour un régime et un couple déterminés.

Chaque réglage de référence peut être particulier à un champ de fonctionnement moteur donné, différents en fonction de l'indice d'octane du carburant. On comprend alors que le basculement vers un réglage de référence correspond également à un basculement vers un champ de fonctionnement moteur différent.

Selon un mode de réalisation particulier, la boucle de correction comprend une boucle rapide (BR) et une boucle lente (BL), l'incrémentation de chaque compteur reposant sur les valeurs de boucle lente (BL) dans les différentes zones du champ de fonctionnement moteur.

Avantageusement, la boucle de correction de l'avance est remise à zéro lors du basculement vers un réglage de référence correspondant à un indice d'octane supérieur.

Dans une application préférée, le compteur de nombre de points morts hauts est réinitialisé lors du basculement vers un réglage de référence correspondant à un indice d'octane supérieur.

En particulier, le procédé comprend au moins trois réglages de références.

Avantageusement, les réglages de référence sont basés sur des indices d'octane réglables, par exemple les indices d'octane suivants : 98, 95, 91 et 87.

Selon un mode de réalisation particulier, on peut ajouter au moins un réglage Ethanol, ayant pour indice E85 et/ou E100.

Selon un mode de réalisation particulier, chaque réglage de référence comprend au moins quatre zones et avantageusement au moins seize zones.

Avantageusement, le champ de fonctionnement moteur de chaque réglage de référence comprend au moins 18 zones.

Une première zone, ci-après nommée zone 0, ne nécessitant pas de valeur corrective de l'avance à l'allumage, les risques de cliquetis étant jugés suffisamment faibles.

Une zone extrême, ci-après nommée zone 17, dans laquelle il est délicat de détecter le cliquetis moteur, pour laquelle on appliquera la valeur de correction de cliquetis de la zone précédente.

Les zones suivantes sont appelées zone 1 à zone 16, et comprennent chacune une valeur initiale corrective de cliquetis, ainsi que deux seuils associés au basculement vers un indice d'octane supérieur.

L'invention est maintenant décrite en faisant référence aux dessins, non limitatifs, dans lesquels :
La figure 1 représente le champ de fonctionnement moteur d'un véhicule ;
La figure 2 représente un diagramme du procédé d'adaptation selon l'invention ;
La figure 3 représente un diagramme de la boucle d'implémentation du compteur de nombre de points morts effectuée à chaque point mort haut, dont la valeur finale est utilisée dans le diagramme de la figure 2 pour la condition TDC_CTR>S4.

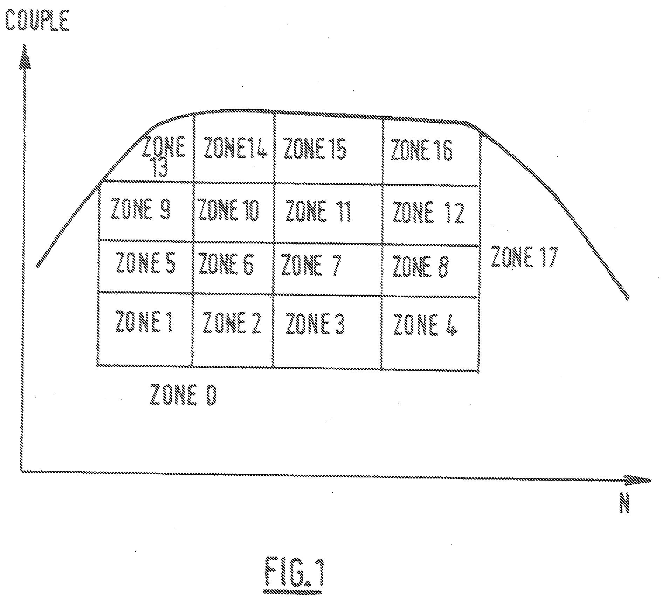

La figure 1 représente le champ de fonctionnement moteur d'un véhicule où l'axe des abscisses représente le régime N en tours/minute du moteur et l'axe des ordonnées représente la charge du moteur, appelée encore le couple, en N.m. La courbe représente les performances maximum du moteur.

Sur cette figure est représenté un quadrillage composé de dix-huit zones numérotées de 0 à 17.

La zone 0, déterminée en dessous d'un couple particulier, ne nécessite pas de réglage d'avance à l'allumage particulier, le phénomène de cliquetis étant rare et ne risquant donc pas d'endommager la chambre de combustion.

Dans la zone 17, déterminée au dessus d'une vitesse donnée, il devient difficile de détecter le phénomène de cliquetis. On applique alors la valeur corrective de la précédente zone traversée.

Les zones 1 à 16 comprennent chacune une valeur de correction boucle lente (BL) anti-cliquetis de l'avance à l'allumage.

Par exemple, la zone 1 peut avoir une valeur corrective (BL_1) de 2°, la zone 2 une valeur corrective (BL_2) de 5°, la zone 3 une valeur corrective (BL_3) de 4°, la zone 4 une valeur corrective (BL_4) de 1° et ainsi de suite.

Lors du fonctionnement du moteur, le passage dans la zone 1 attribuera alors une avance à l'allumage de 29°, correspondant au réglage de référence de 31°, moins une valeur corrective de 2°, correspondant à la valeur corrective de la zone 1. Si le moteur passe dans la zone 2, l'avance à l'allumage sera de 35°, correspondant au 40° du réglage de référence, moins 5° correspondant à la valeur corrective de la zone 2. Ces différentes valeurs correctives doivent corriger l'avance à l'allumage afin d'obtenir un fonctionnement sans cliquetis.

Toutefois, le phénomène de cliquetis n'est pas toujours éradiqué, notamment si l'on a choisi un carburant possédant un indice d'octane plus faible.

A chaque phénomène de cliquetis, et ce, quelque soit la zone concernée, on active une boucle de correction de l'avance, comprenant habituellement une boucle rapide (BR) et une boucle lente (BL). Ainsi, à chaque phénomène de cliquetis, la boucle lente (BL) apporte une correction d'une valeur prédéterminée. Pour l'exemple, on considérera que la boucle rapide (BR) apporte une correction de 4° et la boucle lente (BL) une correction de 2°, à chaque phénomène de cliquetis. Si le phénomène de cliquetis n'est plus détecté, la boucle lente (BL) est dégressive dans le temps d'une valeur prédéterminée. Pour l'exemple, on considérera qu'à chaque temps t+1, la valeur diminuera du quart de sa valeur initiale, soit de 0,5°.

On obtient alors le fonctionnement suivant, lors du passage dans la zone 1, on applique de la valeur globale déterminée plus haut, soit 31°-2°. Si on détecte un cliquetis, on retranche les valeurs de boucle rapide (BR), 4°, ainsi que la valeur de boucle lente (BL), 2°. On obtient alors un réglage de l'avance à l'allumage de 31° - 4° - 2° soit 25°. A un temps t+1, si le phénomène de cliquetis n'est plus là, on décrémente la valeur de la boucle lente, dans l'exemple de 0,5°. On aura alors à un temps t+1, une valeur corrective de 29,5° et à un temps t+2 une valeur corrective de 30° et ainsi de suite. Quand on détecte à nouveau un phénomène de cliquetis, on active à nouveau la boucle de correction. On peut alors se positionner à un temps t+3 où l'on détecte le cliquetis, la valeur corrective précédente étant de 30°, on en retranche la valeur de BR + BL, soit 4° + 2°. On obtient alors un réglage d'avance à l'allumage de 24°.

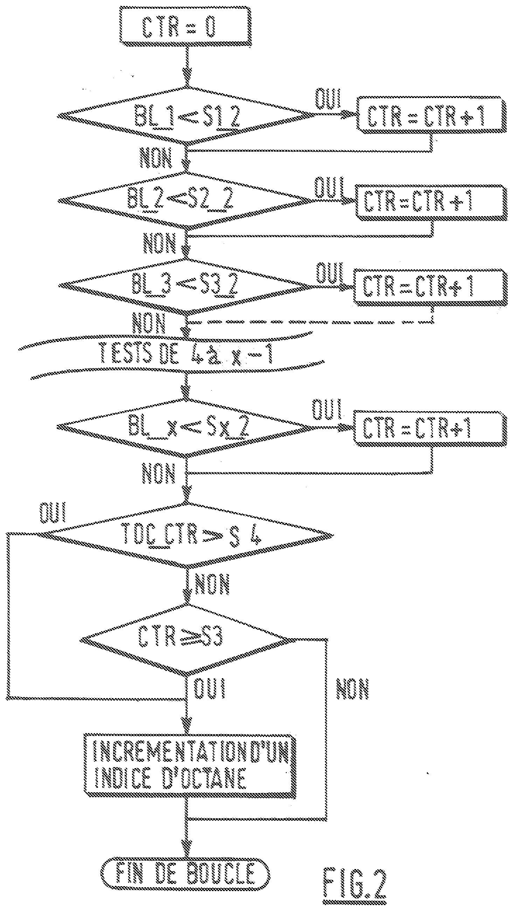

L'invention repose sur deux modes de basculement vers un réglage de référence correspondant à un indice d'octane supérieur, illustrés par le diagramme de la figure 2.

Le premier repose sur le fait qu'à chaque point mort haut (1/2 tour moteur pour un moteur 4 cylindres), dès lors que la boucle lente (BL) de la zone de fonctionnement courante est inférieure à un seuil propre à cette zone, on vient incrémenter un compteur (TDC_CTR). Ce dernier possède une valeur seuil (S4) qui, une fois dépassée provoque le basculement vers un réglage de référence correspondant à un indice d'octane supérieur.

Le second repose sur le fait que toutes les X ms (par exemple X = 100), on compte le nombre de zones dans lesquelles la correction de boucle lente est inférieure à un seuil propre à cette zone. Pour cela, on utilise un compteur (CTR), initialisé à 0 toutes les X ms avant de compter les zones. Ce compteur possède une valeur seuil (S3) qui, une fois atteinte ou dépassée provoque le basculement vers un réglage de référence correspondant à un indice d'octane supérieur.

Dans notre exemple, nous prendrons comme valeur seuil S4 du compteur de points morts hauts pour le premier mode de basculement, la valeur de 1000.

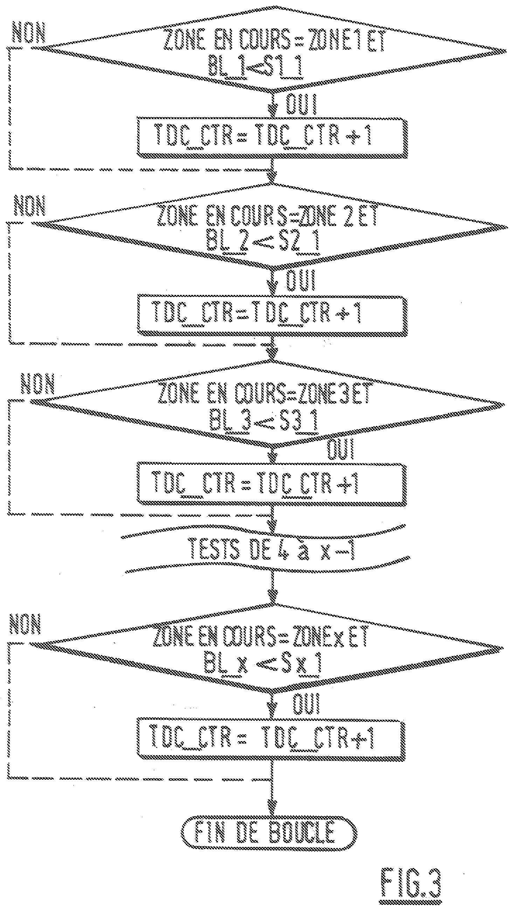

Selon ce premier mode de basculement, on initialise le compteur TDC_CTR à 0 à l'activation du procédé. Tant que la zone de fonctionnement courante est différente de la zone 1 à 16, ou que la correction d'avance boucle lente (BL) dans la zone courante est supérieure à un seuil propre à cette zone, le compteur n'est pas incrémenté. A chaque point mort haut (1/2 tour moteur pour un moteur 4 cylindres à 4 temps), on teste la valeur de boucle lente (BL) de la zone par rapport au seuil de cette zone, tel qu'illustré par le diagramme de la figure 3, sur lequel « x » représente le nombre de zones.

Par exemple, au point mort haut n, dans la zone 1, si la boucle lente (BL) de la zone 1 (BL_ 1) est inférieure au seuil S1_1 défini dans cette zone, on incrémente de 1 le compteur TDC_CTR. Au point mort haut n + 1, étant toujours dans cette zone, n'ayant détecté aucun phénomène de cliquetis depuis le point mort haut n, la boucle lente reste alors encore inférieure au seuil S1_1. Le compteur TDC_TDR est alors encore incrémenté.

Si on passe alors au point mort haut n + 2 à une zone différente, par exemple la zone 2, dans laquelle la boucle lente (BL_2) est inférieure au seuil S2_1 de cette zone, on incrémente le compteur TDC_TCR. Si du cliquetis est détecté dans cette zone entre les points morts hauts n + 2 et n + 3, la valeur de la boucle lente est alors incrémentée. Par exemple, si elle dépasse alors le seuil S2_1, au point mort haut n + 3, le compteur TDC_CTR n'est pas incrémenté. On procède ainsi de suite tant que le moteur est en marche. Quand le compteur de points morts hauts TDC_CTR dépasse le seuil S4, le procédé bascule alors vers un réglage de référence correspondant à un indice d'octane supérieur.

Lors du passage à l'indice d'octane supérieur, on réinitialise le compteur de point mort haut (TDC_CTR=0).

Le procédé comprend également une condition sur le niveau de correction d'avance boucle lente (BL) sur un ensemble de zones. A chaque zone est associé un seuil de correction boucle lente qui, lorsqu'il est atteint sur un nombre de zones défini par le seuil S3 provoque le basculement vers un réglage de référence correspondant à un indice d'octane supérieur.

Dans notre exemple, nous prendrons comme valeur seuil S3 du nombre de zones pour le second mode de basculement, la valeur de 6.

Par exemple (voir figure 2), toutes les X ms (par exemple X = 100), on compte le nombre de zones pour lesquelles le seuil de correction boucle lente n'est pas atteint. A l'instant t, on initialise le compteur CTR (CTR = 0). Si la correction boucle lente (BL_1) de la zone 1 est inférieure à un seuil S1_2 on incrémente le compteur CTR. Si la correction boucle lente (BL_3) de la zone 3 est supérieure à un seuil S3_2, on n'incrémente pas le compteur CTR. On procède ainsi de suite pour les zones 1 à 16. On compare alors la valeur de ce compteur à un seuil de nombre de zones S3. Dans notre exemple, si ce compteur CTR atteint ou dépasse 6, on bascule vers un réglage de référence supérieur par exemple une transition du réglage en indice d'octane SP95 à un réglage en indice d'octane SP98.

Après le passage vers un réglage de référence supérieur, soit par le seuil multizone (S3) soit par la condition sur le nombre de points morts hauts (S4), on vérifie que le fonctionnement sous ce réglage est optimum pendant un temps déterminé. Si le réglage est correct, on continue d'appliquer le nouveau réglage, dans le cas contraire, on redescend au réglage inférieur. Dans le cas où l'on redescend au réglage inférieur, on n'essaye plus alors de remonter de réglage jusqu'à la détection d'ajout de carburant.

En d'autres termes, l'absence de cliquetis pendant un nombre de tours moteur donné, ou un faible niveau de correction de la boucle lente (BL) de cliquetis sur une pluralité de zones du champ de fonctionnement moteur, provoque le basculement vers un réglage supérieur. Si le fonctionnement est jugé correct, notamment au vu du cliquetis détecté avec ce réglage, on stabilise sur le réglage en cours. Dans le cas contraire, on redescend sur le précédent réglage.

## Revendications

1. Procédé d'adaptation du moteur à l'indice d'octane du carburant par incrémentation de l'indice d'octane appris, ledit procédé partant d'un réglage de référence de l'avance à l'allumage dans un champ de fonctionnement moteur pour un indice d'octane déterminé, ledit réglage de référence correspondant à un fonctionnement sans cliquetis du moteur pour un régime (N) et un couple déterminés, le champ de fonctionnement du moteur étant découpé en plusieurs zones, chacune d'elle comprenant une valeur corrective anti-cliquetis de l'avance à l'allumage du réglage de référence, le procédé comprenant au moins les étapes suivantes :
- Initialisation d'un compteur de nombre de points morts hauts (TDC_CTR) à 0 à l'activation du procédé ;
- Détection de la présence de cliquetis sur une période de temps courante (t) ;
- Activation d'une boucle de correction de l'avance de l'angle d'allumage dans le cas d'une détection de la présence de cliquetis sur la période de temps courante (t) ;
- Décrémentation d'une partie de la boucle de correction de l'avance en cas d'absence de détection de la présence de cliquetis sur une période de temps suivante (t+1) ;
- Incrémentation du compteur de nombre de points morts hauts (TDC_CTR) si la correction d'avance dans la zone en cours est inférieure à un seuil propre à cette zone,
- Incrémentation d'un autre compteur de nombre de zones (CTR) à chaque période de temps (X ms) du nombre de zones dans lesquelles la boucle de correction d'avance est inférieure à un autre seuil propre à chaque zone ;
le dépassement par le compteur de nombre de points morts hauts (TDC_CTR) d'un seuil déterminé (S4), ou l'atteinte ou dépassement par le compteur de nombre de zones (CTR) d'un autre seuil déterminé (S3) provoquant le basculement vers un réglage de référence correspondant à un indice d'octane supérieur.

2. Procédé selon la revendication 1, **caractérisé en ce que** la boucle de correction comprend une boucle rapide (BR) et une boucle lente (BL), l'incrémentation de chaque compteur reposant sur les valeurs de boucle lente (BL) dans les différentes zones du champ de fonctionnement moteur.

3. Procédé selon l'une des revendications 1 ou 2, **caractérisé en ce que** la boucle de correction de l'avance est remise à zéro lors du basculement vers un réglage de référence correspondant à un indice d'octane supérieur.

4. Procédé selon l'une quelconque des revendications 1 à 3, **caractérisé en ce que** le compteur de nombre de points morts hauts (TDC_CTR) est réinitialisé lors du basculement vers un réglage de référence correspondant à un indice d'octane supérieur.

5. Procédé selon l'une quelconque des revendications 1 à 4, **caractérisé en ce qu'**il comprend au moins trois réglages de références.

6. Procédé selon la revendication 5, **caractérisé en ce que** les réglages de référence sont basés sur des indices d'octane réglables.

7. Procédé selon l'une quelconque des revendications 1 à 6, **caractérisé en ce que** chaque réglage de référence comprend au moins quatre zones et avantageusement au moins seize zones.

## Patentansprüche

1. Verfahren zur Anpassung des Motors an die Oktanzahl des Kraftstoffs durch Inkrementieren der erlernten Oktanzahl, wobei das Verfahren von einer Referenzeinstellung des Zündzeitpunkts in einem Motorbetriebsbereich für eine bestimmte Oktanzahl ausgeht, wobei die Referenzeinstellung einem klopffreien Betrieb des Motors bei einer bestimmten Drehzahl (N) und einem bestimmten Drehmoment entspricht, wobei der Betriebsbereich des Motors in mehrere Zonen unterteilt ist, von denen jede einen Antiklopf-Korrekturwert des Zündzeitpunkts der Referenzeinstellung umfasst, wobei das Verfahren mindestens die folgenden Schritte umfasst:
- Initialisieren eines Zählers für die Anzahl der oberen Totpunkte (TDC_CTR) auf 0 bei der Aktivierung des Verfahrens;
- Detektieren des Vorliegens von Klopfen über einen aktuellen Zeitraum (t);
- Aktivieren einer Schleife zur Korrektur des Zündzeitpunkts im Fall eines Detektierens des Vorliegens von Klopfen über den aktuellen Zeitraum (t);
- Dekrementieren eines Teils der Schleife zur Korrektur des Zündzeitpunkts im Fall des Nichtdetektierens des Vorliegens von Klopfen über einen folgenden Zeitraum (t+1) ;
- Inkrementieren des Zählers für die Anzahl der oberen Totpunkte (TDC_CTR), wenn die Korrektur des Zündzeitpunkts in der aktuellen Zone unter einer spezifischen Schwelle dieser Zone liegt;
- Inkrementieren eines weiteren Zählers für die Anzahl der Zonen (CTR) in jedem Zeitraum (X ms) um die Anzahl der Zonen, in denen die Schleife zur Korrektur des Zündzeitpunkts unter einer anderen spezifischen Schwelle jeder Zone liegt;
wobei die Überschreitung einer bestimmten Schwelle (S4) durch den Zähler für die Anzahl der Totpunkte (TDC_CTR) oder das Erreichen oder Überschreiten einer anderen bestimmten Schwelle (S3) durch den Zähler für die Anzahl der Zonen ein Umschalten zu einer Referenzeinstellung bewirkt, die einer höheren Oktanzahl entspricht.

2. Verfahren nach Anspruch 1, **dadurch gekennzeichnet, dass** die Korrekturschleife eine schnelle Schleife (BR) und eine langsame Schleife (BL) umfasst, wobei das Inkrementieren jedes Zählers in den verschiedenen Zonen des Motorbetriebsbereichs auf den Werten der langsamen Schleife (BL) beruht.

3. Verfahren nach einem der Ansprüche 1 oder 2, **dadurch gekennzeichnet, dass** die Korrekturschleife des Zündzeitpunkts beim Umschalten zu einer Referenzeinstellung, die einer höheren Oktanzahl entspricht, auf null gesetzt wird.

4. Verfahren nach einem der Ansprüche 1 bis 3, **dadurch gekennzeichnet, dass** der Zähler für die Anzahl der oberen Totpunkte (TDC_CTR) beim Umschalten zu einer Referenzeinstellung, die einer höheren Oktanzahl entspricht, reinitialisiert wird.

5. Verfahren nach einem der Ansprüche 1 bis 4, **dadurch gekennzeichnet, dass** es mindestens drei Referenzeinstellungen umfasst.

6. Verfahren nach Anspruch 5, **dadurch gekennzeichnet, dass** die Referenzeinstellungen auf einstellbaren Oktanzahlen basieren.

7. Verfahren nach einem der Ansprüche 1 bis 6, **dadurch gekennzeichnet, dass** jede Referenzeinstellung mindestens vier Zonen und vorteilhafterweise mindestens sechzehn Zonen umfasst.

## Claims

1. Method of adapting the engine to the octane number of the fuel by incrementing the learned octane number, said method starting out from a reference setting of the ignition advance in an engine operating range for a determined octane number, said reference setting corresponding to a pinking-free operation of the engine at a determined speed (N) and a determined torque, the operating range of the engine being broken down into several zones, each of them comprising an anti-pinking corrective value to be applied to the ignition advance of the reference setting, the method comprising at least the following steps:
- initializing to 0 a top dead centre counter (TDC CTR) upon activation of the method;
- detecting the presence of pinking over a current time period (t);
- activating an ignition advance angle correction loop if pinking is detected over the current time period (t);
- decrementing part of the advance correction loop if the presence of pinking is not detected over a subsequent time period (t+1);
- incrementing the top dead centre counter (TDC_CTR) if the advance correction in the current zone is below a threshold specific to that zone;
- incrementing another, zones counter (CTR) in each time period (X ms) by the number of zones in which the advance correction loop is below another threshold specific to each zone;
the crossing of a determined threshold (S4) by the top dead centres counter (TDC_CTR) or the reaching or crossing of another determined threshold (S3) by the zones counter (CTR) triggering a switch to a reference setting corresponding to a higher octane number.

2. Method according to Claim 1, **characterized in that** the correction loop comprises a fast loop (BR) and a slow loop (BL), the incrementing of each counter relying on the values from the slow loop (BL) in the various zones of the engine operating range.

3. Method according to either of Claims 1 and 2, **characterized in that** the ignition advance correction loop is reset to zero upon a switch to a reference setting corresponding to a higher octane number.

4. Method according to any one of Claims 1 to 3, **characterized in that** the top dead centres counter (TDC_CTR) is reinitialized upon the switch to a reference setting corresponding to a higher octane number.

5. Method according to any one of Claims 1 to 4, **characterized in that** it comprises at least three reference settings.

6. Method according to Claim 5, **characterized in that** the reference settings are based on adjustable octane numbers.

7. Method according to any one of Claims 1 to 6, **characterized in that** each reference setting comprises at least four zones and advantageously at least sixteen zones.
